Europäisches Patentamt

European Patent Office

Office européen des brevets

(11) Numéro de publication: **0 172 076**
**A1**

## (12) DEMANDE DE BREVET EUROPEEN

(21) Numéro de dépôt: 85401448.7

(22) Date de dépôt: 15.07.85

(51) Int. Cl.⁴: **F 04 B 13/02**
F 04 B 1/22, A 01 K 5/02

(30) Priorité: 19.07.84 FR 8411473

(43) Date de publication de la demande:
19.02.86 Bulletin 86/8

(84) Etats contractants désignés:
BE DE GB IT LU NL SE

(71) Demandeur: Ameial, Odile
Tour Avant Seine 4, rue Robert de Fiers
F-75015 Paris(FR)

(72) Inventeur: Ameial, Odile
Tour Avant Seine 4, rue Robert de Fiers
F-75015 Paris(FR)

(74) Mandataire: Bressand, Georges et al,
c/o CABINET LAVOIX 2 Place d'Estienne d'Orves
F-75441 Paris Cedex 09(FR)

(54) Dispositif mesureur-doseur volumétrique pour fluides.

(57) Dispositif mesureur-doseur pour fluides, permettant de doser un fluide secondaire dans un fluide principal, comprenant un corps (1) dans lequel est aménagée une canalisation (20) pour la circulation d'un fluide principal, présentant un orifice d'entrée (22) du fluide et des lumières de distribution (23) du fluide qui débouchent dans une chambre (3) cylindrique délimitée par un carter (2), la chambre (3) contenant des moyens (39, 16, 19, 27, 28, 30) pour entrainer une pompe (36) du fluide secondaire qui comprennent trois pistons (30) montés sur des tiges (16) radiales articulées sur un bras (15) d'une manivelle (39) adapté pour entrainer en translation alternative un piston doseur (35) de la pompe (36), chaque piston (30) pouvant coulisser dans un cylindre (28), monté oscillant autour d'un axe (40). Ce mesureur-doseur débite l'additif proportionnellement au débit du fluide principal en synchronisme avec la manivelle (39) et en ne faisant appel à aucun ressort.

FIG.1

EP 0 172 076 A1

La présente invention est relative à un dispositif mesureur-doseur volumétrique pour fluides, utilisable pour le dosage en continu d'un fluide dans différents domaines de l'industrie et de l'agriculture, tels que, par exemple le dosage d'un liquide nourricier pour les élevages industriels de volailles, porcs, lapins, pour l'irrigation ou toute autre application nécessitant une alimentation en fluide continue, à un débit reproductible. Ce dispositif permet donc de doser un fluide secondaire ou additif à un fluide principal, par exemple, de l'eau.

On connait des systèmes qui font appel à un moteur à eau alternatif, commandant un piston doseur de l'additif. De tels systèmes permettent une addition du fluide secondaire rigoureusement proportionnelle au débit du fluide principal, mais leur conception complexe les rend onéreux et difficiles à mettre en oeuvre de façon satisfaisante.

Un autre dispositif connu comporte un rotor disposé dans un cylindre, le fluide principal circulant dans l'espace ménagé entre ces deux éléments pour entraîner, au moyen d'organes appropriés, le rotor sur lequel est disposé au moins un piston qui communique avec un orifice central d'amenée du fluide secondaire. Le mouvement alternatif du piston, induit par la rotation du rotor permet l'aspiration et le refoulement du fluide secondaire pour l'injecter dans le fluide principal, proportionnellement au débit de ce dernier.

Un tel dispositif nécessite un nombre élevé de pièces notamment des ressorts, ce qui rend sa fabrication onéreuse, et l'expérience a montré qu'il ne donne pas en fait satisfaction.

Afin de pallier ces inconvénients, l'invention a pour but un dispositif mesureur-doseur pour fluides qui délivre un débit d'additif proportionnellement au débit du fluide principal tout en présentant l'avantage de ne nécessiter que peu de pièces distinctes.

Le dispositif mesureur-doseur pour fluides visé par l'invention comprend un corps dans lequel est aménagée une canalisation pour la circulation d'un fluide principal, présentant un orifice d'entrée du fluide et des lumières de distribution du fluide qui traversent le corps, et débouchent dans une chambre délimitée par un carter, adapté pour être fixé sur la face du corps sur laquelle s'ouvrent les lumières de distribution du fluide principal, la chambre contenant des moyens pour entraîner une pompe d'un fluide secondaire destiné à être mélangé au fluide principal.

Conformément à l'invention le dispositif est caractérisé en ce que les moyens d'entraînement de la pompe comprennent au moins trois pistons moteurs montés sur des tiges radiales, articulées sur un bras d'une manivelle, disposé parallèlement à l'axe du corps et qui est adapté pour entraîner en translation alternative un piston doseur de la pompe, chaque piston moteur pouvant coulisser dans un cylindre, monté oscillant autour d'un axe porté par le corps et parallèle à l'axe de ce dernier, et chaque cylindre est percé par une ouverture d'admission du fluide principal dans le cylindre lorsque celle-ci est positionnée angulairement en regard d'une lumière de distribution correspondante du corps, des moyens étant en outre prévus pour permettre l'échappement du fluide principal dans la chambre du carter durant les oscillations des cylindres de part et d'autre des lumières de distribution.

Ce mesureur-doseur ne comporte qu'un nombre minimum de pièces différentes, ne nécessitant pas de ressorts, ce qui simplifie la structure et la conception de l'appareil. Par ailleurs, les pistons ont un mouvement parfaitement synchronisé par la manivelle.

D'autres caractéristiques et avantages de l'invention apparaîtront à la lecture de la description qui va suivre, d'une forme de réalisation, donnée à titre d'exemple et faite en référence aux dessins annexés, sur lesquels :

- la Figure 1 est une vue en coupe axiale d'une forme de réalisation du dispositif selon l'invention, avec arrachement;

- la Figure 2 est une vue en coupe transversale suivant II-II de la Figure 1, la pompe du fluide secondaire n'étant pas représentée pour ne pas surcharger la Figure 2;

- la Figure 3 est une vue en coupe suivant III-III de la Figure 1 avec arrachement;

- la Figure 4 est une vue partielle à plus grande échelle dans le plan de la Figure 3.

_ La Figure 5 est une vue en coupe partielle suivant II-II de la Figure 1 à échelle agrandie montrant la pompe du fluide secondaire;

- la Figure 6 est une vue en élévation schématique de la face du dispositif de la Figure 1 sur laquelle est montée la pompe du fluide secondaire.

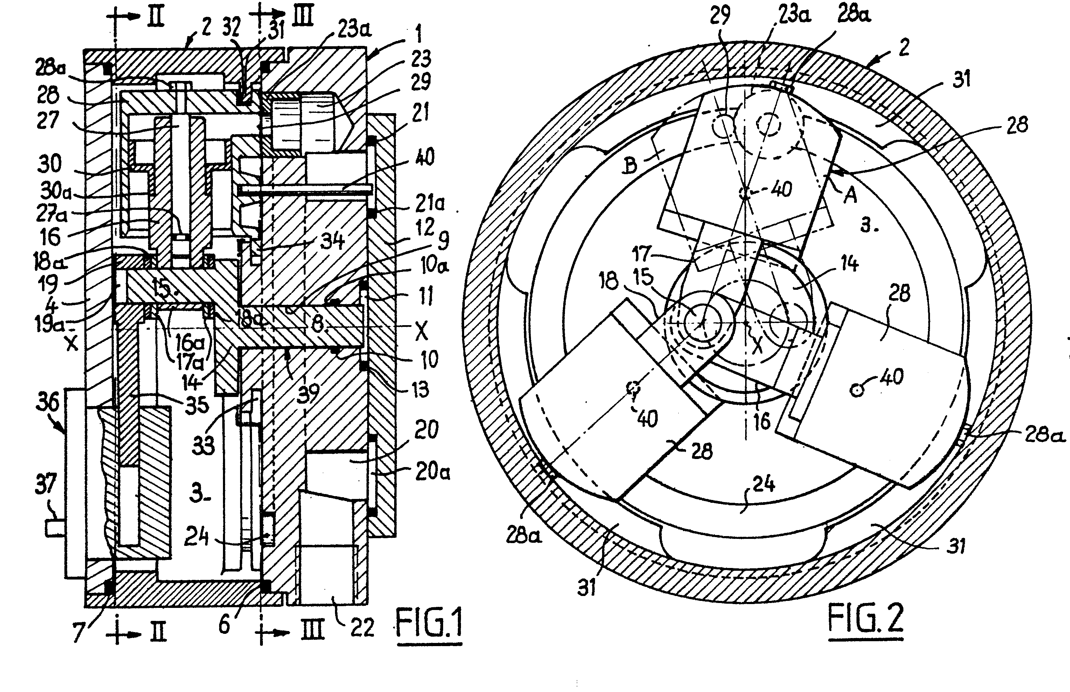

Le dispositif mesureur-doseur pour fluides représenté aux Figures 1 à 6 est destiné à injecter une dose de fluide secondaire à un courant de fluide principal, par exemple un courant d'eau dans un élevage industriel de volailles pour l'alimentation de celles-ci ou l'addition d'huile de coupe à de l'eau sur une machine-outil ou encore un engrais liquide à l'eau d'arrosage.

0172076

4

Ce dispositif comprend un corps 1, dans lequel est aménagée une canalisation 20 pour la circulation d'un fluide principal. Celle-ci présente un orifice d'entrée 22 du fluide et des lumières de distribution 23 du fluide qui traversent le corps 1 et débouchent dans une chambre 3 cylindrique délimitée par un carter 2, adapté pour être fixé sur la face du corps 1 sur laquelle s'ouvrent les lumières de distribution 23, au nombre de trois dans cet exemple et disposées à intervalles angulaires égaux.

La chambre 3, fermée par un couvercle 4, contient des moyens pour entraîner une pompe 36 d'un fluide secondaire destiné à être mélangé au fluide principal.

Suivant une caractéristique essentielle de l'invention, les moyens d'entraînement de la pompe 36 comprennent trois pistons 30 montés sur des tiges 16, 17, 18 radiales et articulées sur un bras 15 d'une manivelle 39, disposé parallèlement à l'axe X-X du corps 1. Le bras 15 est adapté pour entraîner en translation alternative un piston doseur 35 de la pompe 36, chaque piston 30 pouvant coulisser dans un cylindre 28, monté oscillant autour d'un axe 40 porté par le corps 1 et parallèle à l'axe X-X de ce dernier. Chaque cylindre 28 est percé par une ouverture 29 d'admission du fluide principal dans le cylindre 28 lorsque celle-ci est positionnée angulairement en regard d'une lumière de distribution 23 correspondante. Des moyens sont en outre prévus pour permettre l'échappement du fluide principal dans la chambre 3 du carter 2 durant les oscillations des cylindres 28 de part et d'autre des lumières de distribution 23.

Des boulons de fixation (non représentés) du couvercle 4, viennent se visser dans des trous tarau-

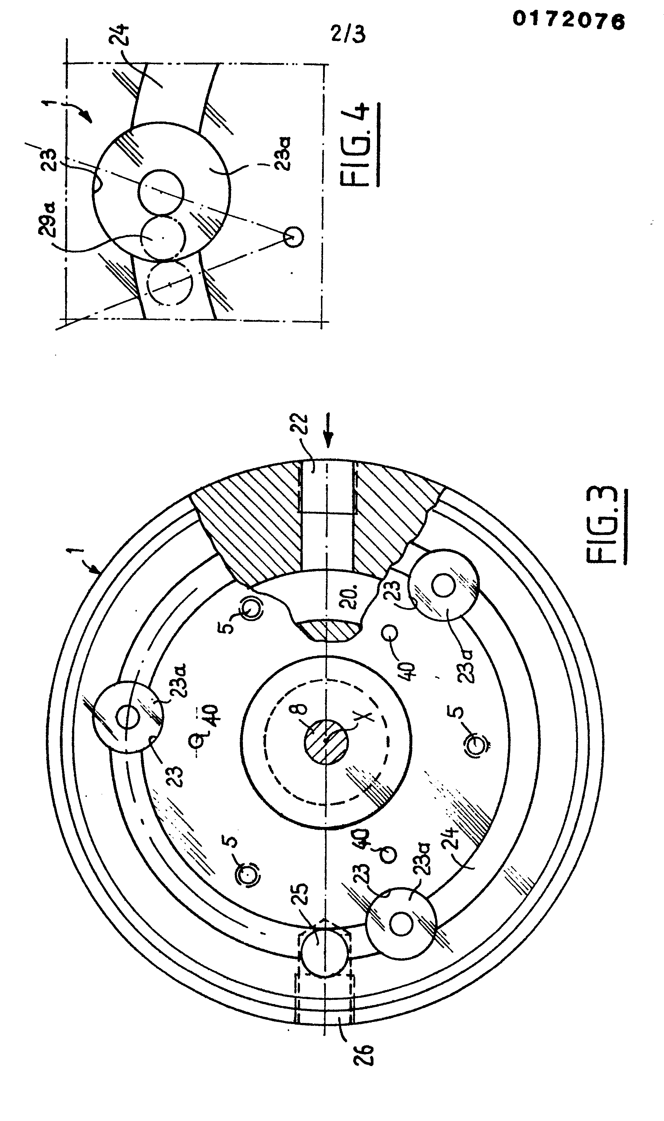

dés 5 (Figure 3) formés sur la face du carter 2 en regard du couvercle 4. L'étanchéité de la chambre 3 est assurée par des joints toriques 6 et 7 disposés respectivement entre le corps 1 et le carter 2 et, entre ce dernier et le couvercle 4 (Figure 1).

Sur la face du corps 1, opposée à la chambre 3, la canalisation 20 de distribution du fluide principal forme un anneau et est fermée par une plaque 12 qui comporte en regard de la canalisation 20 un évidement circulaire 20a, d'une largeur sensiblement supérieure à celle de la canalisation 20, pour recevoir sur chacun de ses bords un joint torique 21 et 21a (Figure 1). Un orifice d'entrée 22 du fluide principal est percé dans le corps 1, perpendiculairement à l'axe X-X, et débouche dans la canalisation 20.

Chacune des lumières 23 est équipée d'une coupelle d'étanchéité 23a dont le fond, percé en son centre, est orienté vers la chambre 3.

La manivelle 39 est formée par un arbre 8, un disque 14 et le bras 15 constitués d'une seule pièce. L'arbre 8 est fixé à une de ses extrémités au centre du disque 14, qui reçoit sur sa face opposée à l'arbre 8, le bras 15 positionné de manière excentrée sur le disque 4. L'arbre 8 est monté à rotation, autour de l'axe X-X du corps 1 et du carter 2, dans un orifice 9 du corps 1, un joint torique 10, disposé dans une gorge 10a formée transversalement sur la longueur de l'orifice 9 étant prévu pour assurer l'étanchéité de la chambre 3. L'extrémité libre de l'arbre 8 débouche sur la face du corps 1, opposée au carter 2, dans une cavité 11 fermée par la plaque 12. Un joint torique 13 (Figure 1) d'étanchéité est prévu entre ces deux éléments.

6 **0172076**

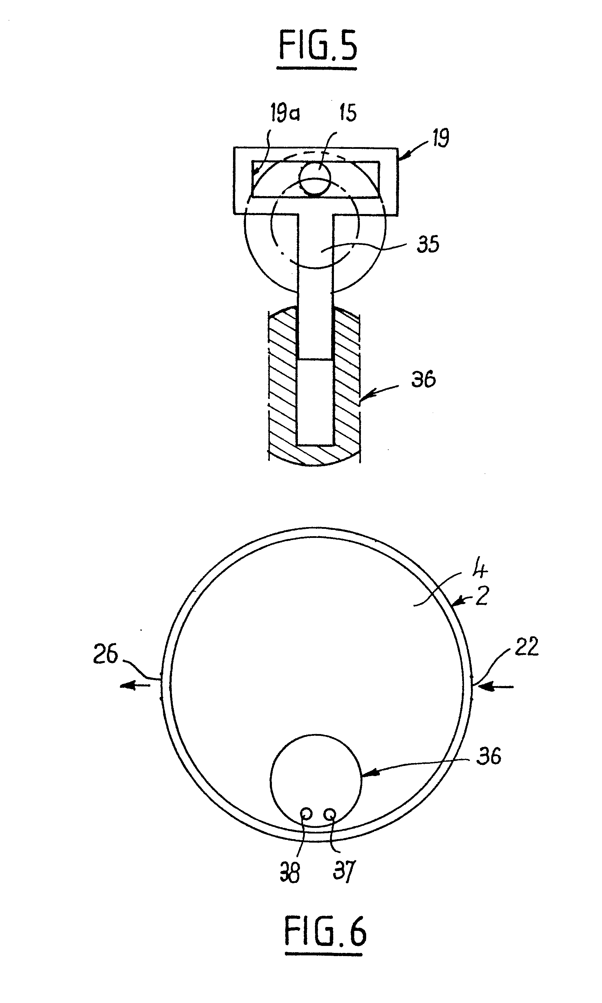

L'extrémité du bras 15 orientée vers le couvercle 4 pénètre dans un évidement transversal 19a formé dans une traverse 19, laquelle est fixée au piston doseur 35 de la pompe 36 du fluide secondaire de façon à former un T avec ledit piston doseur 35 (Figures 1, 5). En se référant à la Figure 6, on peut voir la disposition de la pompe 36 qui est incorporée au couvercle 4. Son entrée 37 et sa sortie 38 sont orientées à l'extérieur du dispositif et sont raccordées respectivement à un réservoir de fluide secondaire, non représenté, et à la sortie 26 du fluide principal d'une manière connue en soi et non représentée.

Les moyens d'entraînement de la pompe 36 comprennent trois tiges 16, 17, 18 montées à rotation sur le bras 15 de la manivelle 39 de telle façon qu'une extrémité 16a de la tige 16 qui coopère avec le bras 15 présente un rétrécissement pour recevoir des pattes 17a de la tige 17 qui sont elles-mêmes insérées entre des pattes 18a de la tige 18, afin que les trois tiges 16, 17, 18 soient dans un même plan radial.

Les tiges 16, 17, 18 ainsi disposées coulissent chacune le long d'un axe 27 fixé au fond d'un cylindre 28 au moyen d'un écrou 28a. Un joint d'étanchéité 27a est prévu au voisinage de l'extrémité libre de chaque axe 27.

Les trois cylindres 28 dont les fonds sont arrondis sont disposés à des intervalles angulaires égaux et chacune de leurs ouvertures 29 a un diamètre égal à celui de l'orifice des coupelles d'étanchéité 23a, débouchant vers le corps 1 de telle façon que l'arc de cercle décrit par le centre de l'ouverture 29 au cours des oscillations du cylindre 28 de part et d'autre de la lumière 23 correspondante, passe sensiblement par le centre de cette dernière.

Ces axes 40 sont positionnés de telle façon que l'ouverture 29 formée dans chaque cylindre 28 coïncide avec l'orifice de la coupelle 23a correspondante dans une position extrême de son oscillation et soit tangente extérieurement à la coupelle 23a dans l'autre position extrême de son oscillation (29b, Figure 4). Ainsi, le diamètre de l'ouverture 29 d'admission est égal à la différence des rayons extérieur et intérieur de la coupelle 23a.

Chaque tige 16, 17, 18 porte un piston souple 30 qui présente la forme d'une jupe, dont l'extrémité de plus grand diamètre est orientée vers le fond du cylindre 28.

Les pistons 30 reposent sur un épaulement annulaire 30a prévu sur chaque tige 16, 17, 18 de telle façon que le bord du piston 30, orienté vers le fond du cylindre, soit sensiblement au niveau de l'ouverture d'admission 29 de celui-ci. Les cylindres 28 sont guidés chacun dans la chambre 3 au cours de leurs oscillations d'une part, par une saillie 31 formée à l'intérieur du carter 2, au voisinage du corps 1, qui coopère avec une gorge 32 en regard de la saillie 31 sur le cylindre 28 et d'autre part, par un évidement circulaire 33, formé dans le corps 1 en arrière du disque 14, qu coopère avec un ergot 34 prévu à l'extrémité ouverte du cylindre 28 au voisinage du corps 1.

Enfin, les moyens d'échappement du fluide principal comprennent une gorge 24 circulaire dans l'exemple représenté, formée à l'intérieur de la chambre 3 sur la face du corps 1. La gorge 24 passe par les trois lumières de distribution 23 en étant interrompue par chaque coupelle 23a et débouche dans un orifice 25 d'évacuation du fuide principal percé parallèllement à l'axe X-X. Cet orifice 25 communique avec un orifice 26 de sortie du fluide principal, formé sur le flanc du corps 1, diamétralement opposé à l'orifice d'entrée 22 (Figure 3).

Le dispositif mesureur-doseur pour fluides ainsi décrit, fonctionne de la manière suivante : le fluide principal pénètre par l'orifice d'entrée 22 dans la canalisation 20, traverse les ouvertures 23 et 29, et remplit la chambre du cylindre 28, comprise entre le piston 30 et le fond du cylindre 28, dont l'ouverture d'admission 29 est au moins partiellement en regard de l'orifice de la coupelle 23a correspondante. Le remplissage du cylindre 28 fait coulisser le piston 30 et, par l'intermédiaire de la tige 16, 17 ou 18 qui coulisse elle-même le long de l'axe 27, met en rotation le bras 15 de la manivelle 39 autour de l'axe X-X.

Au cours du mouvement de révolution de la manivelle 39, autour de l'axe X-X, sur le bras 15 de laquelle basculent les tiges 16, 17, 18, les cylindres 28 passent successivement et progressivement par oscillation autour des axes 40, d'une position extrême A (Figure 2) où l'ouverture d'admission 29 est en regard de la lumière de distribution 23 correspondante (position de remplissage), à une position extrême opposée B (Figure 2) où la lumière d'admission 29 est en regard de la gorge d'échappement 24 (position de vidage). On conçoit qu'au cours des oscillations des cylindres 28, les ouvertures d'admission 29 passent par une position intermédiaire 29a de point mort (Figure 4), où l'ouverture d'admission 29 est en regard de la partie annulaire du fond de la coupelle d'étanchéité 23a.

Le fluide principal remplit la chambre 3 et est évacué vers l'orifice de sortie 26 par l'orifice 25.

Le mouvement de la manivelle autour de l'axe X-X, déclenché par les va-et-vient des pistons 30 dans les cylindres 28 sous l'effet moteur de la pression du fluide principal, entraine un mouvement alternatif du piston doseur 35 de la pompe 36 du fluide secondaire, l'extrémité de la manivelle 15 engagée dans la traverse 19 exécutant des déplacements alternatifs dans son ouverture 19a. Ce mouvement est donc accompagné de l'aspiration du fluide secondaire et de son refoulement dans une canalisation de sortie du fluide principal proportionnellement au débit de celui-ci.

Un tel dispositif mesureur-doseur pour fluides permet d'obtenir un dosage précis et reproductible du fluide secondaire dans le fluide principal, tout en étant d'une conception simple et donc d'un coût de réalisation réduit. Ce dispositif présente en outre l'avantage de ne pas utiliser de ressort.

Dans une variante de réalisation de l'invention, les coupelles d'étanchéité 23a peuvent être remplacées par des joints d'étanchéité annulaires.

REVENDICATIONS

1 - Dispositif mesureur-doseur pour fluides notamment pour le dosage de l'alimentation dans les élevages industriels de volailles, porcs, lapins, pour l'irrigation, pour tous les dosages liquides effectués en continu dans l'industrie, comprenant un corps (1) dans lequel est aménagée une canalisation (20) pour la circulation d'un fluide principal, présentant un orifice d'entrée (22) du fluide et des lumières de distribution (23) du fluide qui traversent le corps (1), et débouchent dans une chambre (3) délimitée par un carter (2), adapté pour être fixé sur la face du corps (1) sur laquelle s'ouvrent les lumières de distribution (23) du fluide principal, la chambre (3) contenant des moyens (8, 14, 15, 16; 17, 18; 30, 28, 27, 19) pour entraîner une pompe (36) d'un fluide secondaire destiné à être mélangé au fluide principal, caractérisé en ce que les moyens d'entraînement de la pompe (36) comprennent au moins trois pistons (30) montés sur des tiges (16, 17, 18) radiales, articulées sur un bras (15) d'une manivelle (39), disposé parallèlement à l'axe (X-X) du corps (1) et qui est adapté pour entraîner en translation alternative un piston doseur (35) de la pompe (36), chaque piston (30) pouvant coulisser dans un cylindre (28), monté oscillant autour d'un axe (40) porté par le corps (1) et parallèle à l'axe (X-X) de ce dernier, et chaque cylindre (28) est percé par une ouverture d'admission (29) du fluide principal dans le cylindre (28) lorsque celle-ci est positionnée angulairement en regard d'une lumière de distribution (23) correspondante du corps (1), des moyens (24) étant en outre prévus pour permettre l'échappement du fluide principal dans la chambre (3) du carter (2) durant les oscillations des cylindres (28) de part et d'autre des lumières de distribution (23).

2 - Dispositif selon la revendication 1, caractérisé en ce que les moyens d'échappement du fluide principal dans la chambre (3) comportent une gorge (24), par exemple circulaire et coaxiale au corps (1), formée dans une face du corps (1) délimitant la chambre (3), cette gorge (24) débouchant dans les lumières de distribution (23) séparées par des intervalles angulaires égaux et communiquant avec l'orifice de sortie (26).

3 - Dispositif selon la revendication 1, caractérisé en ce que la canalisation (20) de circulation du fluide principal est coaxiale à l'axe de l'arbre (8), et les lumières de distribution (23), sont en nombre égal au nombre de cylindres (28).

4 - Dispositif selon la revendication 1, caractérisé en ce que le fond de chaque cylindre (28) est arrondi afin de permettre son débattement contre la paroi circulaire intérieure du carter (2) au cours de ses oscillations.

5 - Dispositif selon l'une quelconque des revendications 1 à 4, caractérisé en ce que chaque piston (30) est monté sur une tige (16, 17, 18) articulée rotativement sur le bras (15) et qui est montée à coulisse autour d'un axe (27), fixé au fond du cylindre (28), les pistons (30) ayant, par exemple, la forme de jupe à rebords cylindriques qui épousent les parois des cylindres (28).

6 - Dispositif selon l'une quelconque des revendications 1 à 5, caractérisé en ce que les lumières de distribution (23) du fluide principal sont équipées chacune d'un joint d'étanchéité (23a) assurant une distribution étanche du fluide principal dans le cylindre (28) correspondant lorsque les ouvertures d'admission (29) du corps (1) et les lumières de distribution (23) des cylindres (28) sont au moins partiellement en regard les unes des autres, ainsi que l'étanchéité avec les cylindres (28) durant les oscillations de ces derniers.

7 - Dispositif selon la revendication 6, caractérisé en ce que les joints d'étanchéité sont des coupelles cylindriques (23a) dont le fond est percé d'un orifice central de diamètre à peu près égal à celui des ouvertures d'admission (29) des cylindres (28) et dont la différence des rayons extérieur et intérieur est égal au diamètre des ouvertures d'admission (29)..

8 - Dispositif selon l'une quelconque des revendications 1 à 7, caractérisé en ce que chaque cylindre (28) comporte des moyens de guidage de celui-ci dans la chambre (3) tels que par exemple au moins une gorge (32) recevant une saillie (31) complémentaire du carter (2) ou une saillie du corps (1), ou inversement (33, 34).

9 - Dispositif selon l'une quelconque des revendications 1 à 8, caractérisé en ce que le piston doseur (35) de la pompe (36) du fluide secondaire comporte à son extrémité opposée au corps de la pompe (36) une traverse (19) fixée de façon à former un T avec ledit piston doseur (35) et pourvue d'un évidement (19a) tranversal pour recevoir l'extrémité contiguë du bras (15) afin de transmettre un déplacement linéaire alternatif au piston doseur (35) à partir du mouvement de rotation du bras (15) de la manivelle (39).

FIG.1

FIG.2

0172076

0172076

FIG.4

FIG.3

## FIG.5

## FIG.6

Office européen
des brevets

**RAPPORT DE RECHERCHE EUROPEENNE**

EP 85 40 1448

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int Cl 4) |
|---|---|---|---|
| Y | FR-A-1 012 516 (TAILLEFERRE) * Page 1, ligne 1 - page 1, colonne de droite, alinéa 1 * | 1 | F 04 B 13/02 F 04 B 1/22 A 01 K 5/02 |
| | --- | | |
| Y | FR-A- 944 568 (MORTON) * En entier * | 1 | |
| A | | 2-4,6-8 | |
| | --- | | |
| A | GB-A- 5 599 (S.F.W.A.)(A.D. 1911) * Page 1, ligne 31 - page 2, ligne 8; figures 1,2 * | 1,9 | |
| | ----- | | |

| | DOMAINES TECHNIQUES RECHERCHES (Int. Cl.4) |
|---|---|
| | F 03 C F 04 B A 01 K A 01 C |

Le présent rapport de recherche a été établi pour toutes les revendications

| Lieu de la recherche | Date d'achèvement de la recherche | Examinateur |
|---|---|---|
| LA HAYE | 24-10-1985 | VON ARX H.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant